# EUROPEAN PATENT APPLICATION

(11) **EP 0 860 920 A1**
(43) Date of publication of application: **26.08.1998**
(21) Application number: 98301155.2
(22) Date of filing: 17.02.1998
(51) Int. Cl.: H02G 1/08, G02B 6/44

(54) **A method and apparatus for installing cable**

(30) Priority: 24.02.1997 US 804557
(71) Applicant: LUCENT TECHNOLOGIES INC., Murray Hill, New Jersey 07974-0636 (US)
(72) Inventor: Travieso, Ruben, Alpharetta, Georgia 30202 (US); Kemp, Howard M., Spartan, New Jersey 07871 (US); Gibson, David W., Chester, New Jersey 07930 (US); Sanchez, Ismael, Wharton, New Jersey 07885 (US); Thornton, Donald P., Bangor, Pennsylvania 18013 (US)
(74) Representative: Johnston, Kenneth Graham

(57) **Abstract**

The present invention provides a method and apparatus for pulling cables, such as, for example, cables which contain optical fibers. The apparatus comprises two capstans around which the cable or a tie line attached to the cable is wrapped in a figure-of-eight configuration. One of the capstans is a pulling capstan which can be driven by a motor. The other capstan may also be motor-driven or it may be a free-turning capstan. The cable or tie line is wrapped in one direction around one of the capstans and in the other direction around the other capstan to form the figure-of-eight pattern. For example, the cable or tie line may be wrapped in the clockwise direction around the pulling capstan and in the counter clockwise direction around the second capstan. In this case, the pulling capstan is rotated in the clockwise direction to pull the cable. By wrapping the cable around the capstans in the figure-of-eight configuration, twisting of the cable when it is wrapped around the capstans or when it is removed from the capstans is prevented or reduced. Wrapping the cable around the capstans in the figure-of-eight configuration also prevents twists or reduces the number of twists in the cable when it is being pulled by the pulling capstan.

## Description

### Technical Field Of The Invention

The present invention relates to a method and apparatus for installing cable and, more particularly, to a method and apparatus for pulling cable through a duct which utilizes a first capstan and a second capstan around which a cable or a tie line attached to the cable is wrapped in a figure-of-eight configuration. The figure-of-eight configuration prevents or reduces twisting in the cable when the cable or tie line is being wrapped around and unwrapped from the capstans and as it is being pulled through the duct. The method and apparatus of the present invention is particularly advantageous when implemented as an intermediate capstan system.

### Background Of The Invention

Capstans are used to pull cable through innerducts which are laid, for example, under streets or under ground and which protect and guide the cables. When the innerducts are laid, tie lines are usually left in the ducts. The tie lines are used at a later time for pulling cables through the ducts. In order to pull a cable through a duct, an end of the cable is attached to an end of the tie line and the other end of the tie line is wrapped about a pulling capstan, or primary winch, which is motor driven. As the primary winch is rotated by the motor, the cable is pulled through the duct. Typically, the tie line is wrapped about the primary winch a plurality of times to ensure sufficient frictional coupling between the tie line and the winch. If the cable is pulled around the capstan at the end of the pull to develop additional cable slack, then when the cable is removed from the primary winch, the cable will have 360° of twist in it for each time the tie line was wrapped about the primary winch prior to pulling the cable. If it is necessary to pull the cable to another location with another primary winch, this twist may cause damage to the cable.

At times, the tension exerted on cables as they are being pulled by the primary winch will exceed the load rating of the cables, which may result in damage to the cables. In order to reduce the tension on the cable, it is known to implement an intermediate assist capstan at an intermediate location upstream from the pulling capstan. The intermediate assist capstan, which is typically motor driven, pulls the cable through the duct at the intermediate location. This shortens the distance over which the cable must be pulled by the primary capstan, thus decreasing the amount of tension exerted on the cable. It is estimated that intermediate assist capstans are used in ten to twenty percent of all cable pulls.

As is the case with the prior art primary winch system, each circumferential wrap of the cable about the intermediate capstan imparts a 360° twist on the cable. The cable typically is wrapped about the intermediate capstan at least five times to establish sufficient frictional coupling between the intermediate capstan and the cable, which normally is lubricated. The accumulation of twisting strain on the cable may cause damage to the cable and therefore is undesirable.

Accordingly, a need exists for a system for pulling cable which prevents or reduces twisting of the cable.

### Summary Of The Invention

The present invention provides a system for pulling cable comprising a first capstan and a second capstan. The cable or tie line is wrapped about the capstans in a figure-of-eight configuration, which eliminates or greatly reduces the degree of twist which normally occurs in the cable when it is wrapped about a single capstan. The system of the present invention can be implemented as a primary capstan system or as an intermediate assist capstan system. In accordance with the present invention, the cable or tie line is wrapped around the first capstan in a first direction and around the second capstan in a second direction to provide a figure-of-eight configuration. Preferably, the cable or tie line is wrapped about the capstans in this manner until the capstans have a plurality of wraps of the cable or tie line around them. Preferably, both of the capstans are motor-driven in opposite directions. Alternatively, the first capstan is motor-driven and the second capstan is a free-turning capstan.

If the capstan is a primary wind or a planned intermediate assist capstan, in most cases the tie line attached to the cable is wrapped on the capstan. Alternatively, when a capstan is added after the cable has passed the intermediate pull point the cable is wrapped on the capstan.

In addition to preventing or reducing twisting in the cable when it is wrapped around the capstans or removed therefrom, twisting in the cable is also prevented or reduced when the system of the present invention pulls the cable through the conduit. Preferably, the system of the present invention is used for pulling cables containing optical fibers. However, the present invention can be used to pull any type of cable. As stated above, the system of the present invention may be used as a primary winch or it may be used as an intermediate assist capstan system. In either case, the system of the present invention prevents or reduces twisting in the cable.

### Brief Description Of The Drawings

Figs. 1A and 1B depict the prior art capstan system for pulling cables.

Figs. 2A and 2B depict the method and apparatus of the present invention for pulling cables.

### Detailed Description Of The Invention

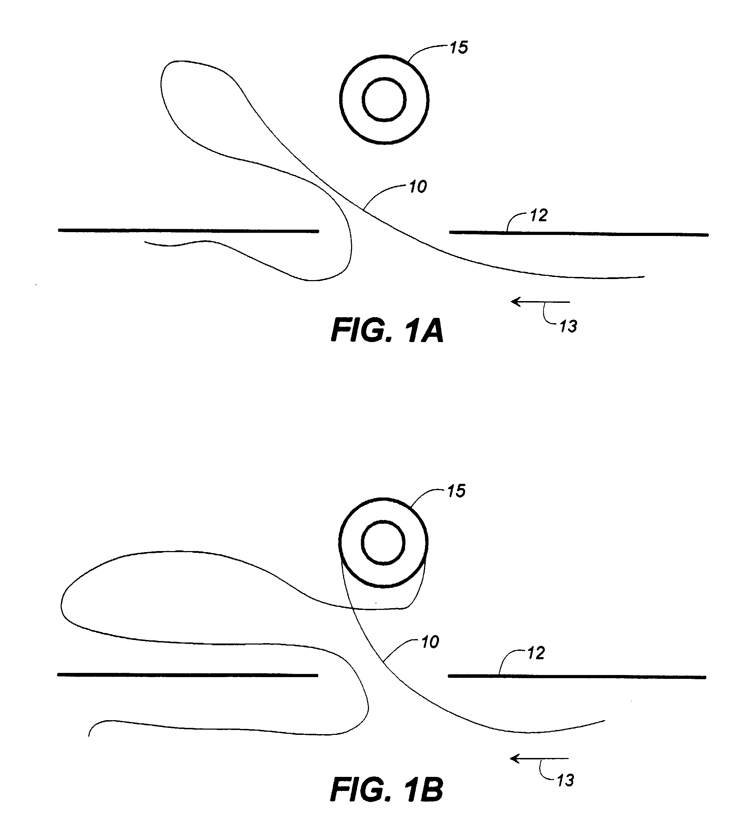

Figs. 1A and 1B depict the prior art capstan system for pulling cables. Fig. 1A shows a cable 10 which has been laid below a surface 12, such as a street. The opening in the surface 12 may be, for example, a manhole for providing access to the cable or tie line 10. As stated above, if the capstan system is being implemented as a primary wind or as a planned intermediate assist capstan, in most cases the tie line attached to the cable is wrapped on the capstan. Alternatively, when the capstan system is added after the cable has passed the intermediate pull point, the cable, rather than the tie line, is wrapped on the capstan. A capstan 15 is positioned near the manhole for pulling the cable or tie line 10 in the direction indicated by arrow 13. Fig. 1B shows the cable or tie line 10 wrapped around the capstan 15. The capstan 15 may represent a primary winch or it may represent an intermediate assist capstan. The cable or tie line 10 normally is wrapped around the capstan 15 at least five times to create a sufficient amount of friction between the cable 10 and the capstan 15 to enable the capstan 15 to pull the cable 10 as capstan 15 rotates. The capstan 15 typically is driven by a motor (not shown) which rotates the capstan 15. In order to pull the cable or tie line 10 in the direction indicated by arrow 13, the capstan 15 rotates in the clockwise direction.

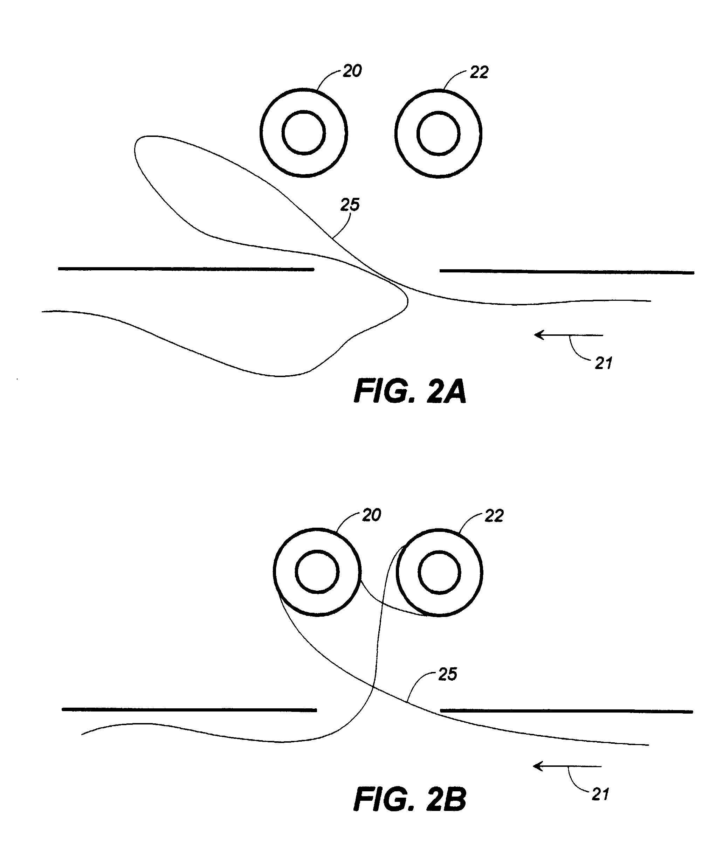

Figs. 2A and 2B show the preferred embodiment of the method and apparatus of the present invention. In accordance with the preferred embodiment, capstan 20 is a pulling capstan which preferably is driven by a motor (not shown). Alternatively, the capstan 20 may be rotated by hand, although it may be impractical to do so due to the length of cable to be pulled. Capstan 22 preferably is also motor driven. Alternatively, capstan 22 may be a free-turning capstan. In accordance with the preferred embodiment of the present invention, the cable or tie line 25 is wrapped around capstan 20 in the clockwise direction and around capstan 22 in the counter clockwise direction to form a figure-of-eight configuration, as shown in Fig. 2B. Preferably, the cable or tie line 25 is wrapped in this manner until the capstans 20, 22 have at least five wraps of cable around them. The cable or tie line 25 is then pulled by capstan 20 in the direction indicated by arrow 21 as the pulling capstan 20 is rotated by a motor (not shown) in the clockwise direction. Alternatively, the cable or tie line 25 may be wrapped about pulling capstan 20 in the counter clockwise direction and around capstan 22 in the clockwise direction. In this case, the capstan 20 will be driven in the counter clockwise direction.

In accordance with an alternative embodiment, capstan 22 is the pulling capstan. The cable 25 may be wrapped around the capstans 20, 22 in the same manner as discussed above. The cable 25 is then pulled in the direction indicated by arrow 21 as capstan 22 is rotated by a motor (not shown). The direction in which the pulling capstan 22 is rotated will depend on the direction in which the cable 25 is wrapped about the capstans to form the figure-of-eight configuration.

It should be noted that the present invention has been described only with reference to the preferred embodiments. However, it will be apparent to those skilled in the art that the present invention is not limited to these embodiments. It will also be apparent to those skilled in the art that modifications can be made to the present invention without deviating from the spirit and scope of the present invention

## Claims

1. An apparatus for pulling a cable comprising:
a pulling capstan having a substantially cylindrical shape;
means for rotating said pulling capstan in a first direction with respect to an axis of said pulling capstan;
a second capstan having a substantially cylindrical shape, said second capstan comprising means for allowing said second capstan to rotate in a second direction with respect to an axis of said second capstan, wherein a cable or a tie line attached to the cable is wrapped around said pulling capstan and said second capstan in a figure-of-eight configuration so that twisting of the cable when the cable or tie line is wrapped around said pulling capstan and said second capstan in the figure-of-eight configuration is prevented or reduced and so that twisting of the cable when the cable or tie line is removed from said apparatus is prevented or reduced.

2. The apparatus of claim 1 wherein the cable or tie line attached to the cable is wrapped around said pulling capstan and said second capstan in the figure-of-eight configuration at least five times prior to said pulling capstan being rotated by said means for rotating.

3. The apparatus of claim 1 wherein said means for rotating is a motor coupled to a shaft of said pulling capstan.

4. The apparatus of claim 1 wherein the cable or tie line is wrapped around said pulling capstan in the first direction and around said second capstan in the second direction to form the figure-of-eight configuration, and wherein a plurality of figure-of-eights are formed with the cable or tie line prior to said pulling capstan being rotated by said means for rotating, and wherein said apparatus pulls the cable by causing said means for rotating to rotate said pulling capstan in the first direction.

5. The apparatus of claim 4 wherein the cable or tie line is wrapped around said pulling capstan and said second capstan in the figure-of-eight configuration at least five times prior to said pulling capstan being rotated by said means for rotating.

6. The apparatus of claim 5 wherein said means for rotating is a motor coupled to a shaft of said pulling capstan.

7. The apparatus of claim 6 wherein said apparatus further comprises means for rotating said second capstan in the second direction, and wherein said means for rotating said first capstan and said means for rotating said second capstan comprises a motor.

8. A method for pulling cable comprising the steps of:
(a) wrapping a cable or a tie line attached to the cable around a pulling capstan in a clockwise direction and around a second capstan in a counter clockwise direction to form a figure-of-eight configuration;
(b) rotating the pulling capstan in the clockwise direction to thereby pull the cable, wherein wrapping said cable around said pulling capstan and said free capstan in the figure-of-eight configuration reduces twisting in the cable when the cable or tie line is wrapped around the capstans and reduces the number of twists in the cable when the cable or tie line is removed from the pulling capstan.

9. The method of claim 8 wherein the pulling capstan and the second capstan are comprised as an intermediate assist capstan system.

10. The method of claim 9 wherein, prior to step (b), step (a) is performed a plurality of times to form a plurality of figure-of-eight wraps.

11. A method for pulling cable comprising the steps of:
(a) wrapping a cable or a tie line attached to the cable around a pulling capstan in a counter clockwise direction and around a second capstan in a clockwise direction to form a figure-of-eight configuration;
(b) rotating the pulling capstan in the counter clockwise direction to thereby pull the cable, wherein wrapping said cable or tie line around said pulling capstan and said second capstan in the figure-of-eight configuration reduces twists in the cable when the cable or tie line is wrapped around the capstans and reduces the number of twists in the cable when it is removed from the pulling capstan.

12. The method of claim 11 wherein the pulling capstan and the second capstan are comprised as an intermediate assist capstan system.

13. The method of claim 12 wherein, prior to step (b), step (a) is performed a plurality of times to form a plurality of figure-of-eight wraps.

14. A method for pulling cable comprising the steps of:
(a) wrapping a cable or a tie line attached to the cable around a free-turning capstan in a clockwise direction and around a pulling capstan in a counter clockwise direction to form a figure-of-eight configuration;
(b) rotating the pulling capstan in the counter clockwise direction to thereby pull the cable, wherein wrapping the cable or tie line around said pulling capstan and said free-turning capstan in the figure-of-eight configuration reduces twisting in the cable when the cable or tie line is wrapped around the capstans and reduces the number of twists in the cable when it is removed from the pulling capstan.

15. The method of claim 14 wherein the pulling capstan and the free-turning capstan are comprised as an intermediate assist capstan system.

16. The method of claim 15 wherein, prior to step (b), step (a) is performed a plurality of times to form a plurality of figure-of-eight wraps.

17. A method for pulling cable comprising the steps of:
(a) wrapping a cable or a tie line attached to the cable around a free-turning capstan in a counter clockwise direction and around a pulling capstan in a clockwise direction to form a figure-of-eight configuration;
(b) rotating the pulling capstan in the clockwise direction to thereby pull the cable, wherein wrapping said cable or tie line around said pulling capstan and said free-turning capstan in the figure-of-eight configuration reduces twisting in the cable when the cable or tie line is wrapped around the capstans and reduces the number of twists in the cable when it is removed from the pulling capstan.

18. The method of claim 17 wherein the drive capstan and the free-turning capstan are comprised as an intermediate assist capstan system.

19. The method of claim 18 wherein, prior to step (b), step (a) is performed a plurality of times to form a plurality of figure-of-eight wraps.
